(19)

Europäisches Patentamt

European Patent Office

Office européen des brevets

(11)  EP 3 544 165 A1

(12)  **DEMANDE DE BREVET EUROPEEN**

(43) Date de publication:
   **25.09.2019   Bulletin 2019/39**

(51) Int Cl.:
   *H02M 3/24* (2006.01)

(21) Numéro de dépôt: **19164647.0**

(22) Date de dépôt: **22.03.2019**

(84) Etats contractants désignés:
   **AL AT BE BG CH CY CZ DE DK EE ES FI FR GB GR HR HU IE IS IT LI LT LU LV MC MK MT NL NO PL PT RO RS SE SI SK SM TR**
   Etats d'extension désignés:
   **BA ME**
   Etats de validation désignés:
   **KH MA MD TN**

(30) Priorité:  **22.03.2018   FR 1852495**

(71) Demandeurs:
   • **ALSTOM Transport Technologies**
      **93400 Saint-Ouen (FR)**
   • **Alpha Innovations S.A.**
      **1348 Ottignies Louvain-la-Neuve (BE)**

(72) Inventeurs:
   • **TEBOUL, Guillaume**
      **6000 CHARLEROI (BE)**
   • **DELPLANQUE, Jean-Pierre**
      **1348 OTTIGNIES LOUVAIN-LA-NEUVE (BE)**
   • **FLORE, Yoann**
      **1348 LOUVAIN-LA-NEUVE (BE)**
   • **VELAERTS, Bruno**
      **1348 OTTIGNIES LOUVAIN-LA-NEUVE (BE)**

(74) Mandataire: **Lavoix**
      **2, place d'Estienne d'Orves**
      **75441 Paris Cedex 09 (FR)**

(54)   **DISPOSITIF D'ALIMENTATION ÉLECTRIQUE, INSTALLATION ÉLECTRIQUE ET PROCÉDÉ DE RÉPARTITION DE LA PUISSANCE ÉLECTRIQUE DÉLIVRÉE PAR UN TEL DISPOSITIF**

(57)   Ce dispositif (16) d'alimentation électrique d'une charge électrique (14), comprend au moins deux unités (26A, 26B) d'alimentation électrique distinctes. Chaque unité d'alimentation électrique (26A, 26B) comprend une entrée (28A, 28B) propre à être connectée à un réseau d'alimentation électrique respectif (12A, 12B), une sortie (30A, 30B) propre à être connectée à la charge (14), et un organe (32A, 32B) d'alimentation électrique de la charge (14). Chaque unité d'alimentation électrique (26A, 26B) comprend un capteur (34A, 34B) de mesure d'une grandeur électrique relative à un signal primaire (S2A, S2B) reçu sur l'entrée (28A, 28B) et un organe (36A, 36B) de régulation de la valeur de la tension d'un signal d'alimentation (S3A, S3B) délivré par l'organe d'alimentation électrique (32A, 32B) à la charge (14), en fonction de la valeur de la grandeur électrique mesurée par chaque capteur de mesure (34A, 34B).

FIG.1

EP 3 544 165 A1

## Description

La présente invention concerne un dispositif d'alimentation électrique d'une charge électrique, le dispositif comprenant au moins deux unités d'alimentation électrique distinctes, chaque unité d'alimentation électrique comprenant une entrée propre à être connectée à un réseau d'alimentation électrique respectif, une sortie propre à être connectée à la charge, et un organe d'alimentation électrique de la charge.

La présente invention concerne également une installation électrique comprenant un tel dispositif d'alimentation et un procédé de répartition de la puissance électrique délivrée par un tel dispositif d'alimentation électrique à une charge.

Dans le domaine de l'alimentation électrique de charges électriques et notamment de l'alimentation d'une installation ferroviaire, il est connu d'utiliser deux réseaux d'alimentation électrique propres à alimenter en énergie électrique un dispositif d'alimentation comprenant deux unités d'alimentation électrique qui sont connectées électriquement à une même charge. L'alimentation électrique des charges, qui sont, par exemple, des feux tricolores, des aiguillages, des détecteurs de présence de train (circuit de voie ou compteur d'essieux par exemple), est ainsi redondante.

Une telle alimentation électrique redondante permet de garantir l'alimentation en énergie électrique des charges, même après un défaut au niveau de l'un des réseaux d'alimentation électrique ou de l'une des unités d'alimentation d'un même dispositif d'alimentation.

Cependant, la plupart du temps, les réseaux d'alimentation électrique et le ou les dispositifs d'alimentation ne sont pas en défaut et l'objectif est d'utiliser alors au mieux la redondance de l'installation électrique pour alimenter les charges.

A cet effet, il est connu d'utiliser un dispositif d'alimentation électrique tel que précité, qui comprend des moyens de mesure de l'intensité du courant d'un signal d'alimentation délivré à la charge par chaque unité d'alimentation, et dans lequel les unités d'alimentation sont propres à s'échanger entre elles les valeurs d'intensité du courant mesurées. Chaque unité d'alimentation est alors propre à comparer la valeur de l'intensité du courant mesurée qu'elle délivre avec les valeurs d'intensité du courant mesurées en sortie de l'autre unité d'alimentation et à commander la valeur de la tension du signal d'alimentation en fonction de la comparaison réalisée afin que chaque unité d'alimentation fournisse la même puissance électrique à la charge. Ainsi dans le cas d'un dispositif de charge comprenant deux unités d'alimentation, chaque unité d'alimentation est propre à délivrer 50% de la puissance requise par la charge. Cela permet de répartir de manière égale l'apport en énergie électrique nécessaire à l'alimentation de la charge entre les unités d'alimentation, mais aussi entre les réseaux d'alimentation.

Cependant, dans de tels dispositifs d'alimentation, le fonctionnement des unités d'alimentation n'est pas optimisé et conduit notamment à des pertes électriques importantes au niveau des réseaux d'alimentation.

Le but de l'invention est donc de proposer un dispositif d'alimentation dans lequel le fonctionnement des unités d'alimentation est optimisé.

A cet effet, l'invention a pour objet un dispositif d'alimentation du type précité, caractérisé en ce que chaque unité d'alimentation électrique comprend un capteur de mesure d'une grandeur électrique relative à un signal primaire reçu sur l'entrée et un organe de régulation de la valeur de la tension d'un signal d'alimentation délivré par l'organe d'alimentation électrique à la charge, en fonction de la valeur de la grandeur électrique mesurée par chaque capteur de mesure.

Grâce à l'invention, le fonctionnement du dispositif d'alimentation et notamment des unités d'alimentation est optimisé, puisqu'il est piloté en fonction d'une grandeur électrique relative à un signal primaire reçu sur l'entrée et non pas d'un signal d'alimentation délivré en sortie des unités d'alimentation. Ainsi, la tension du signal d'alimentation est fonction des caractéristiques du signal primaire et non du signal d'alimentation et donc des caractéristiques des réseaux d'alimentation. Cela permet notamment de minimiser les pertes électriques dans les réseaux d'alimentation.

Selon des aspects avantageux mais non obligatoires de l'invention, un tel dispositif d'alimentation comprend en outre une ou plusieurs des caractéristiques suivantes, prises isolément ou suivant toutes les combinaisons techniquement possibles :

- chaque unité d'alimentation électrique est reliée aux autres unités d'alimentation électrique via une liaison de communication de la grandeur électrique mesurée par chaque capteur de mesure des autres unités d'alimentation électrique,

- pour chaque unité d'alimentation, la grandeur électrique mesurée est soit la tension du signal primaire en entrée de l'unité d'alimentation, soit l'intensité du courant du signal primaire, soit une puissance électrique relative au signal primaire,

- l'organe de régulation comprend un bloc de calcul d'une valeur de tension désirée du signal d'alimentation en fonction de la grandeur électrique mesurée par chaque capteur de mesure et un bloc de pilotage de l'organe d'alimentation électrique, propre à piloter la valeur de la tension du signal d'alimentation délivré par l'organe d'alimentation en fonction de la valeur de tension désirée,

- pour chaque unité d'alimentation la valeur de tension désirée est une fonction croissante de la différence entre, d'une part, la valeur de la grandeur électrique mesurée par le capteur associé à l'unité d'alimentation et, d'autre part, la moyenne arithmétique des valeurs de grandeur électrique mesurées par chaque autre capteur,

- chaque unité d'alimentation électrique comprend un organe de mesure de la tension du signal d'alimentation en sortie, et le bloc de pilotage est configuré pour piloter l'organe d'alimentation en fonction de la valeur de tension désirée et de la valeur mesurée de la tension du signal d'alimentation,
- le bloc de calcul comprend un module d'obtention d'une variable de comparaison en fonction de la valeur de la grandeur électrique mesurée par le capteur associé à l'unité d'alimentation et des valeurs mesurées par les autres capteurs, un module de mémorisation d'une consigne nominale de tension propre à la charge, un module de détermination d'une valeur d'ajustement de la consigne nominale de tension en fonction de la variable de comparaison et un module de calcul de la valeur de tension désirée, propre à modifier la valeur de consigne en fonction de la valeur d'ajustement pour obtenir la valeur de tension désirée.

L'invention a également pour objet une installation électrique comprenant au moins deux réseaux d'alimentation électrique, au moins un dispositif d'alimentation et une charge électrique respective connectée électriquement à chaque dispositif d'alimentation caractérisé en ce que chaque dispositif d'alimentation est selon l'une quelconque des revendications précédentes et comprend une unité d'alimentation respective reliée à chaque réseau d'alimentation électrique, et en ce que pour chaque dispositif d'alimentation, l'entrée est connectée électriquement à l'un des réseaux d'alimentation électrique correspondant et la sortie est connectée électriquement à la charge.

Avantageusement, l'installation électrique est caractérisée en ce que pour chaque dispositif d'alimentation, en configuration nominale d'utilisation du dispositif d'alimentation, chaque unité d'alimentation est reliée électriquement à la charge et est configurée pour délivrer une tension non nulle à la charge.

L'invention a, en outre, pour objet un procédé de répartition de la puissance électrique délivrée par un dispositif d'alimentation à une charge électrique, le dispositif d'alimentation comprenant au moins deux unités d'alimentation distinctes chaque unité d'alimentation comprenant une entrée propre à être connectée à un réseau d'alimentation électrique respectif, une sortie propre à être connectée à la charge et un organe d'alimentation électrique de la charge, caractérisé en ce le procédé comprend pour chaque unité d'alimentation les étapes suivantes :

- la mesure, par un capteur de mesure, d'une grandeur électrique relative à un signal primaire reçu sur l'entrée,
- la régulation d'une tension délivrée par l'organe d'alimentation électrique en fonction de la grandeur électrique mesurée par chaque capteur de mesure.

L'invention sera mieux comprise et d'autres avantages de celle-ci apparaîtront à la lumière de la description qui va suivre, donnée uniquement à titre d'exemple non limitatif et faite en se référant aux dessins annexés sur lesquels :

- la figure 1 est une représentation schématique simplifiée d'une installation électrique comprenant un dispositif d'alimentation électrique conforme à un mode de réalisation de l'invention et connecté entre, d'une part, deux réseaux d'alimentation électrique distincts et, d'autre part, une même charge ;
- la figure 2 est une représentation détaillée d'une unité d'alimentation électrique appartenant au dispositif d'alimentation de la figure 1 ; et
- la figure 3 est une représentation d'un organigramme d'un procédé de répartition de la puissance électrique délivrée par le dispositif d'alimentation de la figure 1.

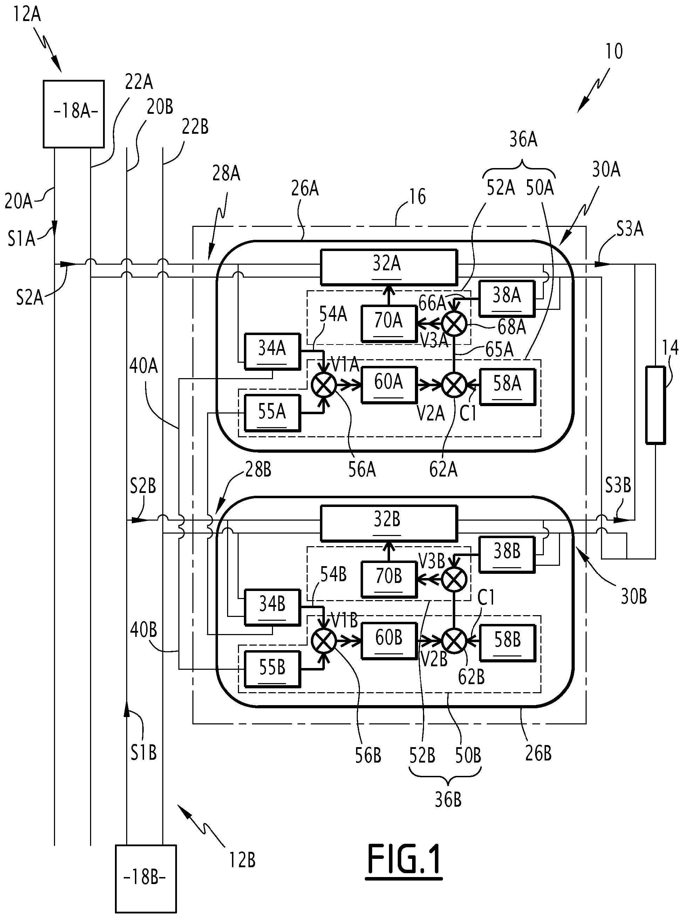

A la figure 1 une installation électrique 10 est représentée. L'installation électrique 10 comprend un premier 12A et un deuxième 12B réseaux d'alimentation électrique, une charge électrique 14 et un dispositif d'alimentation électrique 16 connecté électriquement entre, d'une part, les premier et deuxième réseaux 12A, 12B et, d'autre part, la charge 14.

L'installation électrique 10 est, par exemple, une installation électrique équipant une voie ferroviaire.

Avantageusement, l'installation électrique 10 comprend une pluralité de dispositifs d'alimentation électrique 16 connecté les uns à la suite des autres aux réseaux d'alimentation électrique 12A, 12B.

Chaque réseau d'alimentation, à savoir le premier 12A et le deuxième 12B réseaux, comprend une source 18A, 18B d'alimentation électrique, un premier conducteur électrique 20A, 20B et un deuxième conducteur électrique 22A, 22B.

Chaque premier conducteur électrique 20A, 20B est, par exemple, un conducteur de phase 20A, 20B et est également appelé par la suite conducteur de phase 20A, 20B.

Chaque deuxième conducteur électrique 22A, 22B est, par exemple, un conducteur de neutre 22A, 22B et est également appelé par la suite conducteur de neutre 22A, 22B.

Chaque source d'alimentation 18A, 18B est propre à délivrer sur les premiers conducteurs électriques 20A, 20B un signal S1A, S1B d'apport d'énergie électrique au dispositif d'alimentation 16.

Avantageusement, les sources d'alimentation électrique 18A, 18B sont, par exemple, situées géographiquement à l'opposé l'une de l'autre, de part et d'autre du dispositif d'alimentation 16.

Plus précisément, lorsque l'installation électrique 10 comprend une pluralité de dispositif d'alimentation électrique 16 les sources d'alimentation électrique 18A, 18B sont avantageusement situées à l'opposé l'une de l'autre, c'est-à-dire chacune à une extrémité opposée de l'installation électrique 10.

La charge électrique 14 est, par exemple, un feu tricolore, un détecteur de présence de train ou un aiguillage ou tout autre équipement électrique ou électronique pour des applications autres que le ferroviaire, comme par exemple les systèmes d'information.

Le dispositif d'alimentation électrique 16 comprend deux unités 26A, 26B d'alimentation électrique distinctes.

Dans la suite de la description, essentiellement l'unité d'alimentation électrique 26A sera décrite en détail, sachant que l'unité d'alimentation 26B est identique et que les éléments de l'unité d'alimentation 26B similaires à ceux de l'unité d'alimentation 26A ne sont pas décrits à nouveaux et portent les mêmes références, dans lesquelles la lettre A est remplacé par la lettre B.

L'unité d'alimentation électrique 26A comprend une entrée 28A connectée au premier réseau 18A et qui reçoit un signal primaire S2A de la part du premier réseau 18A, une sortie 30A connectée à la charge 14 et un organe 32A d'alimentation électrique de la charge 14, qui délivre un signal d'alimentation électrique S3A à la charge 14 via la sortie 30A.

L'unité d'alimentation électrique 26A comprend également un capteur 34A de mesure d'une grandeur électrique, telle que la tension, relative au signal primaire reçu sur l'entrée 28A, un organe 36A de régulation de la valeur de la tension du signal d'alimentation S3A délivré par l'organe d'alimentation électrique 32A à la charge 14 et un organe 38A de mesure de la tension du signal d'alimentation S3A en sortie 30A.

En configuration nominale d'utilisation du dispositif d'alimentation 16, chaque unité d'alimentation 26A, 26B est reliée électriquement à la charge 14 de manière continue, c'est-à-dire sans interruption de la liaison électrique entre la charge et chaque unité d'alimentation 26A, 26B. De plus, chaque unité d'alimentation 26A, 26B est configurée pour délivrer un signal d'alimentation électrique S3A, S3B de tension non nulle à la charge 14. En outre, en configuration nominale d'utilisation du dispositif d'alimentation 16, chaque unité d'alimentation 26A, 26B est reliée électriquement réseau d'alimentation 22A, 22B correspondant de manière continue.

Chaque unité d'alimentation électrique 26A, 26B est reliée électriquement à l'autre unité d'alimentation électrique via une liaison électrique 40A, 40B, en variante optique, de communication de la grandeur électrique mesurée par le capteur de mesure 34A, 34B de l'autre unité d'alimentation électrique 26A, 26B.

L'entrée 28A est reliée électriquement au conducteur de phase 20A et au conducteur de neutre 22A.

La sortie 30A est connectée en parallèle de la charge 14.

L'entrée 28B de l'unité d'alimentation électrique 26B est connectée électriquement au deuxième réseau 12B et la sortie 30B est connectée à la charge 14.

L'organe d'alimentation électrique 32A est, par exemple, un convertisseur de tension propre à être piloté par l'organe de régulation 36A et à convertir le signal primaire S2A qui a une tension égale à une première valeur, en le signal d'alimentation S3A qui a une tension égale à une deuxième valeur régulée à partir de l'organe de régulation 36A.

Le signal primaire S1A est, par exemple, un signal alternatif tandis que le signal d'alimentation S3A est, par exemple, un signal continu.

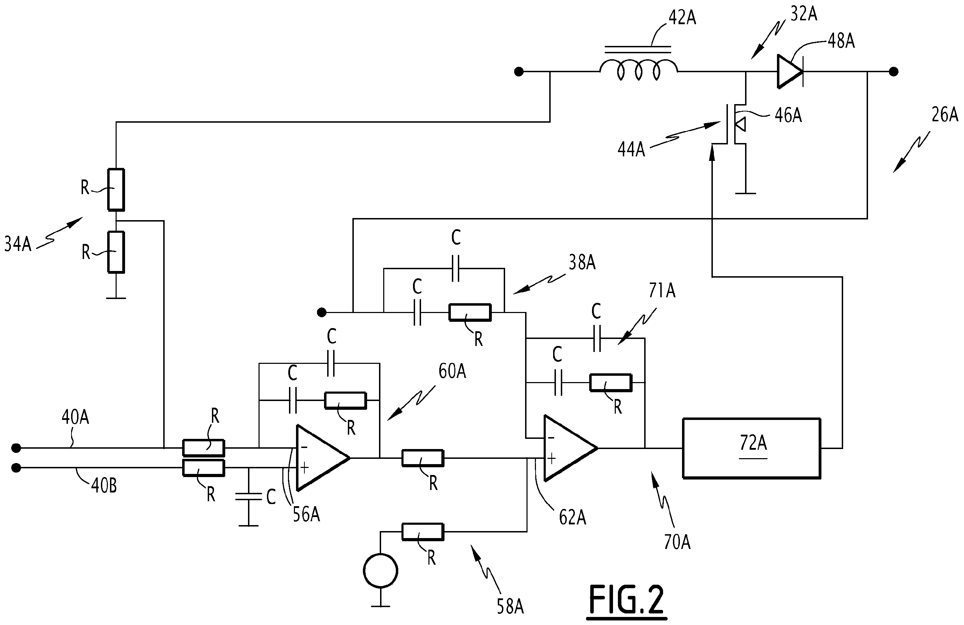

Comme représenté à la figure 2, l'organe d'alimentation électrique 32A comprend, par exemple, un transformateur électrique 42A, un circuit de commutation 44A comportant au moins un interrupteur commandable 46A et un convertisseur alternatif /continu 48A, tel qu'un pont de diode.

En variante, le transformateur électrique 42A est remplacé par une inductance.

La figure 2 représente un mode de réalisation possible de l'organe d'alimentation électrique 32A. Dans la pratique, l'organe d'alimentation électrique 32A peut avoir de multiples topologies (dépendant des niveaux de puissance, des spécifications de réglages, de rendement, du type de conversion (AC/DC ou DC/DC,...)), et comporter ou non une isolation galvanique.

Le capteur 34A est avantageusement un capteur de tension propre à mesurer la tension du signal primaire S2A.

Chaque capteur 34A, 34B est configuré pour transmettre à l'organe de régulation 36A, 36B de l'unité d'alimentation 32A, 32B à laquelle il est associé, mais aussi à l'organe de régulation 36A, 36B de l'autre unité d'alimentation 32A, 32B, la valeur de la grandeur électrique qu'il mesure.

L'organe de régulation 36A comprend un bloc 50A de calcul d'une valeur de tension désirée du signal d'alimentation S3A en fonction de la grandeur électrique mesurée par chaque capteur de mesure 34A, 34B et un bloc 52A de pilotage de l'organe d'alimentation électrique 32A, propre à piloter la valeur de la tension du signal d'alimentation S3A délivré par l'organe d'alimentation 32A en fonction de la valeur de tension désirée.

Le bloc de calcul 50A comprend des premiers moyens 54A de réception de la valeur de la grandeur électrique mesurée par le capteur 34A associé à l'unité d'alimentation 26A à laquelle il appartient, ainsi que des deuxièmes moyens 55A de réception de la valeur de la grandeur électrique mesurée par le capteur 34B associé à l'autre unité d'alimentation 26B.

Le bloc de calcul 50A comprend également un module 56A d'obtention d'une variable de comparaison V1A, en fonction de la valeur de la grandeur électrique mesurée par le capteur 34A associé à l'unité d'alimentation 36A et de la valeur mesurée par l'autre capteur 34B, un module 58A de mémorisation d'une consigne nominale de tension C1 propre à la charge, un module 60A de détermination d'une valeur d'ajustement V2A de la consigne nominale de tension C1 et un module 62A de calcul de la valeur de tension désirée.

Les premiers moyens de réception 54A sont reliés électriquement au capteur 34A et reçoivent les valeurs de la grandeur électrique mesurées par le capteur 34A.

Les deuxièmes moyens de réception 55A sont reliés électriquement à la liaison électrique de communication 40B et reçoivent les valeurs de la grandeur électrique mesurées par le capteur 34B.

Le module d'obtention 56A est, par exemple, configuré pour calculer la différence entre, d'une part, la valeur de la grandeur électrique mesurée par le capteur 34A associé à l'unité d'alimentation et la valeur de la grandeur électrique mesurée par l'autre capteur 34B pour obtenir la variable de comparaison V1A.

Le module de mémorisation 58A mémorise la consigne nominale de tension C1, qui correspond à une tension nominale d'alimentation de la charge 14 et est donc relative à la charge 14. La consigne nominale de tension C1 est généralement la même pour chaque unité d'alimentation 26A, 26B connectée à une même charge 14. La consigne nominale de tension C1 est non nulle et est, par exemple, comprise entre 1V et 1,5 kV, de préférence supérieure à 10 Volts.

Le module de détermination 60A est configuré pour calculer la valeur d'ajustement V2A de la consigne C1 en fonction de la variable de comparaison V1A. La valeur d'ajustement V2A correspond à une tension à ajouter à la consigne nominale de tension C1. Le module de détermination 60A est configuré pour appliquer une première équation prédéterminée à la variable de comparaison V1A. Le module d'obtention 60A est, par exemple, un correcteur proportionnelle intégrale dérivée également appelé correcteur PID.

La valeur d'ajustement V2A est une fonction croissante de la variable de comparaison V1A. La première équation prédéterminée est par exemple de la forme suivant : $\dfrac{V2A}{V1A} = G + \dfrac{1}{Ti} * \dfrac{1}{s} + Td * s$ , où s désigne la variable de Laplace, Ti et Td sont des constantes de temps de valeur prédéterminée et G est un gain.

Le module 62A de calcul de la valeur de tension désirée est, par exemple, configuré pour calculer la somme entre la variable d'ajustement V2A et la consigne nominale de tension C1 afin d'obtenir la valeur de tension désirée.

La valeur de tension désirée est une fonction croissante de la variable de comparaison V1A.

La valeur de tension désirée est comprise autour de la consigne nominale de tension C1 et est par exemple propre à varier de plus ou moins 100 millivolts par rapport à la consigne nominale de tension.

Le bloc de pilotage 52A comporte des troisièmes moyens 65A de réception de la valeur de tension désirée calculée par le bloc de calcul 50A, des quatrièmes moyens 66A de réception des valeurs de tension mesurées par l'organe de mesure 38, un module 68A de calcul d'une variable d'erreur V3A et un module 70A de pilotage de l'organe d'alimentation 32A.

Les troisièmes moyens de réception 65A sont reliés électriquement au bloc de calcul 50A et notamment au module de calcul 62A.

Les quatrièmes moyens 66A de réception sont reliés électriquement à l'organe de mesure 38A.

Le module 68A de calcul de la variable d'erreur V3A est, par exemple, propre à calculer la différence entre la tension désirée et la tension mesurée par l'organe de mesure 38A.

Le module de pilotage 70A est configuré pour calculer et générer un signal modulé en largeur d'impulsion en fonction de la variable d'erreur V3A et est propre à appliquer le signal modulé en largeur d'impulsion calculé à une électrode de commande de l'interrupteur commandable 46A.

Le module de pilotage 70A calcule, par exemple, un rapport cyclique du signal modulé en largeur d'impulsion à appliquer à l'interrupteur commandable 46A.

En configuration nominale d'utilisation du dispositif d'alimentation 16, les rapports cycliques des signaux modulés en largeur d'impulsion à appliquer aux interrupteurs commandables 46A et 46B sont non nuls.

A cet effet, le module de pilotage 70A comprend, par exemple, comme présenté à la figure 2, un module 71A de calcul du rapport cyclique et un module 72A de génération du signal modulé en largeur d'impulsion.

Les blocs de calcul 50A et de pilotage 52A sont soit implémentés au niveau d'un processeur ou plus généralement d'un circuit logique programmable de type FPGA, qui vient de l'anglais et signifie « Field Programmable Gâte Array », propre à réaliser l'ensemble des opérations décrites ci-dessus, soit implémentés sous la forme de composants analogiques.

Dans l'exemple de la figure 2, les blocs de calcul 50A et de pilotage 52A sont implémentés sous la forme de composants analogique et comprennent des amplificateurs opérationnels, des inverseurs, des comparateurs, des résistances R et des condensateurs C.

En d'autres termes, les modules d'obtention 56A, de mémorisation 58A, de détermination 60A de calcul 62A et 68A et de pilotage 70A comprennent des composants discrets connus de l'homme du métier et associés aux fonctions élémentaires nécessaires à la mise en oeuvre des modules décrits ci-dessus.

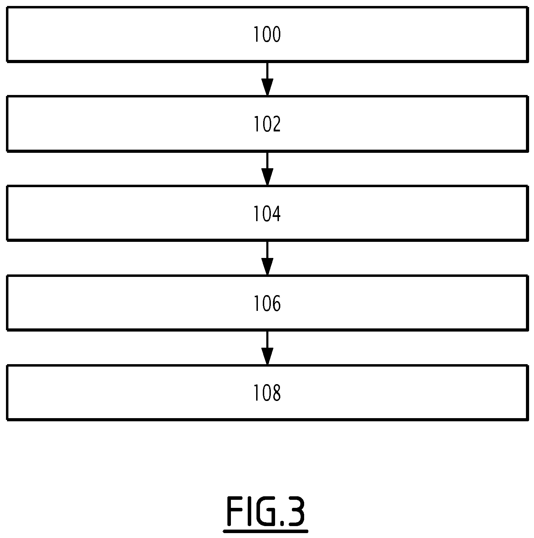

Le fonctionnement de l'installation électrique 10 et du dispositif d'alimentation 12 va être expliqué plus en détail à l'aide de l'organigramme de la figure 3, qui présente un procédé de répartition de la puissance électrique délivrée par le dispositif d'alimentation 16.

Lors d'une première étape de mesure 100, les capteurs 34A, 34B mesurent la grandeur électrique relative au signal primaire S1A, S1B et les organes de mesure 38A, 38B mesurent la tension du signal d'alimentation S3A, S3B.

Ensuite, au cours d'une étape réception 102, les premiers moyens de réception 54A, 54B récupèrent les valeurs de la grandeur électrique mesurées par le capteur 34A, 34B associé à l'unité d'alimentation 26A, 26B correspondante, les deuxièmes moyens de réception 55A, 55B récupèrent les valeurs de la grandeur électrique mesurées par l'autre capteur 34A, 34B et les quatrièmes moyens de réception 66A, 66B récupèrent les valeurs de tensions mesurées par l'organe de mesure 38A, 38B correspondant.

Puis, lors d'une étape de calcul 104, le bloc de calcul 50A, 50B de chaque unité d'alimentation 26A, 26B calcule la valeur d'ajustement V2A, V2B et la valeur de tension désirée à l'aide des modules d'obtention 56A, 56B, de détermination 60A, 60B, de mémorisation 58A, 58B et de calcul 62A, 62B, conformément à ce qui a été présenté ci-dessus.

Ensuite, lors d'une étape de récupération 106, chaque bloc de pilotage 52A, 52B reçoit la valeur de la tension du signal d'alimentation S3A, S3B mesurée par l'organe de mesure correspondant 38A, 38B, ainsi que la valeur de tension désirée calculée par le bloc de calcul 50A, 50B.

Enfin, au cours d'une étape de régulation 108, chaque bloc de pilotage 52A, 52B calcule le signal modulé en largeur d'impulsion en fonction de la valeur de la tension du signal d'alimentation S3A, S3B et de la valeur de la tension désirée qu'il a reçu à l'étape 106 et applique le signal modulé en largeur d'impulsion calculé à l'électrode de commande de l'interrupteur commandable correspondant 46A, 46B.

Plus généralement, lors de l'étape de régulation 108, chaque bloc de pilotage régule la tension délivrée par l'organe d'alimentation électrique 32A, 32B à la charge en fonction de la grandeur électrique mesurée par chaque capteur de mesure 34A, 34B.

Suite à l'étape de régulation 108, chaque organe d'alimentation 32A, 32B est piloté pour délivrer le signal d'alimentation S3A, S3B avec la tension désirée correspondante à la charge 14.

Plus généralement, chaque organe d'alimentation 32A, 32B délivre le signal d'alimentation S3A, S3B avec une tension respective de valeur non nulle lorsque l'installation est dans son fonctionnement nominale et qu'aucun défaut électrique n'est détecté. Plus précisément, chaque organe d'alimentation 32A, 32B délivre le signal d'alimentation S3A, S3B avec une tension variant, par exemple, de plus ou moins 100 mV par rapport à la consigne nominale de tension.

Les valeurs de tensions des signaux d'alimentation S3A, S3B sont généralement différentes et fonction de la grandeur électrique mesurée par les capteurs de mesure 34A, 34B. En d'autres termes, lorsque les valeurs de grandeur électrique mesurées par les capteurs 34A, 34B sont différentes les valeurs de tension des signaux d'alimentation S3A, S3B sont différentes.

Sachant que pour chaque unité d'alimentation 26A, 26B la valeur de tension désirée est une fonction croissante de la variable de comparaison, l'unité d'alimentation 26A, 26B qui mesure la plus grande valeur de la grandeur électrique sur son entrée 28A, 28B délivre le signal d'alimentation S3A, S3B présentant la plus grande tension et fournit la majorité de la puissance électrique et de l'énergie électrique nécessaire à la charge.

En d'autres termes, l'unité d'alimentation 26A, 26B qui reçoit sur son entrée 28A, 28B le signal primaire S2A, S2B de plus haute tension est privilégiée pour l'alimentation électrique de la charge 14 et délivre plus d'énergie électrique à la charge 14 que l'autre unité d'alimentation.

Le fait de commander chaque organe d'alimentation 32A, 32B en fonction du signal primaire S2A, S2B qu'il reçoit permet de minimiser les pertes dans les conducteurs de phase 20A, 20B et de neutre 22A, 22B et ainsi d'améliorer le rendement de la transmission d'énergie électrique entre les sources d'alimentation 18A, 18B et la charge 14. La consommation électrique de l'installation électrique 10 est ainsi optimisée.

Plus précisément, le dispositif d'alimentation 16 permet d'alimenter la charge 14 essentiellement à partir du réseau d'alimentation 18A, 18B qui présente la plus haute tension en entrée des unités d'alimentation 26A, 26B et ainsi de minimiser les pertes.

Comparativement aux dispositifs d'alimentation de l'état de la technique les pertes dans les conducteurs électriques 20A, 20B, 22A, 22B sont réduites d'approximativement 50%.

En outre, chaque organe d'alimentation 32A, 32B délivre généralement un signal d'alimentation S3A, S3B différent et est utilisé de manière différente, de sorte que les risques que les organes d'alimentation 32A, 32B soient en défaut simultanément est réduit.

Enfin, l'installation électrique 10 est redondante et permet de garantir une alimentation de la charge 14 même en cas de défaut sur l'un des réseaux d'alimentation 12A, 12B.

En variante, l'installation électrique comprend plus de deux réseaux d'alimentation électrique distincts, un dispositif d'alimentation et une charge connectée électriquement au dispositif d'alimentation. Chaque dispositif d'alimentation comprend alors une unité d'alimentation respective pour chaque réseau d'alimentation électrique et chaque unité d'alimentation a son entrée connectée électriquement à un réseau d'alimentation électrique différent, tandis que la sortie de chaque unité d'alimentation est connectée électriquement à la charge. Dans cette variante, chaque unité d'alimentation électrique est reliée aux autres unités d'alimentation électrique via une liaison de communication de la grandeur électrique mesurée par chaque capteur de mesure des autres unités d'alimentation électrique. Ainsi, chaque bloc de calcul est propre à calculer la valeur d'ajustement et donc la tension désirée en fonction de la grandeur électrique mesurée par chaque capteur de mesure. Pour chaque unité d'alimentation, la valeur de tension désirée est, par exemple, une fonction croissante de la variable de comparaison qui est, par exemple, égale à la différence entre, d'une part, la valeur de la grandeur électrique mesurée par le capteur associé à l'unité d'alimentation et, d'autre part, la moyenne arithmétique des valeurs de grandeur électrique mesurées par les autres capteurs.

Avantageusement, l'installation électrique comprend une pluralité de charges et une pluralité de dispositifs d'alimentation connectés chacun à une charge différente et répartis sur une importante distance, par exemple supérieure à 1000 mètres.

Selon une autre variante, la grandeur électrique est un courant d'entrée, c'est-à-dire l'intensité du courant du signal primaire ou une puissance électrique relative au signal primaire.

Selon une autre variante, l'installation électrique 10 est une installation électrique triphasée ou à courant continu.

Les modes de réalisation et variantes envisagés ci-dessus sont propres à être combinés entre eux pour donner lieu à d'autres modes de réalisation de l'invention.

## Revendications

1. Dispositif (16) d'alimentation électrique d'une charge électrique (14), le dispositif comprenant au moins deux unités (26A, 26B) d'alimentation électrique distinctes, chaque unité d'alimentation électrique (26A, 26B) comprenant une entrée (28A, 28B) propre à être connectée à un réseau d'alimentation électrique respectif (12A, 12B), une sortie (30A, 30B) propre à être connectée à la charge (14), et un organe (32A, 32B) d'alimentation électrique de la charge (14), **caractérisé en ce que** chaque unité d'alimentation électrique (26A, 26B) comprend un capteur (34A, 34B) de mesure d'une grandeur électrique relative à un signal primaire (S2A, S2B) reçu sur l'entrée (28A, 28B) et un organe (36A, 36B) de régulation de la valeur de la tension d'un signal d'alimentation (S3A, S3B) délivré par l'organe d'alimentation électrique (32A, 32B) à la charge (14), en fonction de la valeur de la grandeur électrique mesurée par chaque capteur de mesure (34A, 34B).

2. Dispositif d'alimentation selon la revendication 1, **caractérisé en ce que** chaque unité d'alimentation électrique (26A, 26B) est reliée aux autres unités d'alimentation électrique (26A, 26B) via une liaison (40A, 40B) de communication de la grandeur électrique mesurée par chaque capteur de mesure (34A, 34B) des autres unités d'alimentation électrique (26A, 26B).

3. Dispositif d'alimentation selon la revendication 1 ou 2, **caractérisé en ce que** pour chaque unité d'alimentation (26A, 26B), la grandeur électrique mesurée est soit la tension du signal primaire (S2A, S2B) en entrée (28A, 28B) de l'unité d'alimentation, soit l'intensité du courant du signal primaire (S2A, S2B), soit une puissance électrique relative au signal primaire.

4. Dispositif d'alimentation selon l'une quelconque des revendications précédentes, **caractérisé en ce que** l'organe de régulation (36A, 36B) comprend un bloc (50A, 50B) de calcul d'une valeur de tension désirée du signal d'alimentation en fonction de la grandeur électrique mesurée par chaque capteur de mesure (34A, 34B) et un bloc (52A, 52B) de pilotage de l'organe d'alimentation électrique, propre à piloter la valeur de la tension du signal d'alimentation délivré par l'organe d'alimentation (32A, 32B) en fonction de la valeur de tension désirée.

5. Dispositif selon la revendication 4, **caractérisé en ce que** pour chaque unité d'alimentation (26A, 26B) la valeur de tension désirée est une fonction croissante de la différence entre, d'une part, la valeur de la grandeur électrique mesurée par le capteur (34A, 34B) associé à l'unité d'alimentation (26A, 26B) et, d'autre part, la moyenne arithmétique des valeurs de grandeur électrique mesurées par chaque autre capteur (34A, 34B).

6. Dispositif d'alimentation selon la revendication 4 ou 5, **caractérisé en ce que** chaque unité d'alimentation électrique (26A, 26B) comprend un organe (38A, 38B) de mesure de la tension du signal d'alimentation (S3A, S3B) en sortie (30A, 30B), et **en ce que** le bloc de pilotage (52A, 52B) est configuré pour piloter l'organe d'alimentation (32A, 32B) en fonction de la valeur de tension désirée et de la valeur mesurée de la tension du signal d'alimentation (S3A, S3B).

7. Dispositif selon l'une quelconque des revendications 4 à 6, **caractérisé en ce que** le bloc de calcul comprend un module (56A, 56B) d'obtention d'une variable de comparaison (V1A, V1B) en fonction de la valeur de la grandeur électrique mesurée par le capteur (34A, 34B) associé à l'unité d'alimentation (26A, 26B) et des valeurs mesurées par les autres capteurs (34A, 34B), un module (58A, 58B) de mémorisation d'une consigne nominale de tension (C1) propre à la charge (14), un module (60A, 60B) de détermination d'une valeur d'ajustement (V2A, V2B) de la consigne nominale de tension (C1) en fonction de la variable de comparaison (V1A, V1B) et un module (62A, 62B) de calcul de la valeur de tension désirée, propre à modifier la valeur de consigne (C1) en fonction de la valeur d'ajustement (V2A, V2B) pour obtenir la valeur de tension désirée.

8. Installation électrique (10) comprenant au moins deux réseaux d'alimentation électrique (12A, 12B), au moins un dispositif d'alimentation (16) et une charge électrique respective (14) connectée électriquement à chaque dispositif d'alimentation (16), **caractérisé en ce que** chaque dispositif d'alimentation (16) est selon l'une quelconque des revendications précédentes et comprend une unité d'alimentation respective (26A, 26B) reliée à chaque réseau d'alimentation électrique (12A, 12B), et **en ce que** pour chaque dispositif d'alimentation (16), l'entrée (28A, 28B) est connectée électriquement à l'un des réseaux d'alimentation électrique correspondant (12A, 12B) et la sortie (30A, 30B) est connectée électriquement à la charge.

9. Installation électrique selon la revendication 8, **caractérisé en ce que** pour chaque dispositif d'alimentation (16), en configuration nominale d'utilisation du dispositif d'alimentation (16), chaque unité d'alimentation (26A, 26B) est reliée électriquement à la charge (14) et est configurée pour délivrer une tension non nulle à la charge.

10. Procédé de répartition de la puissance électrique délivrée par un dispositif d'alimentation (16) à une charge électrique (14), le dispositif d'alimentation (16) comprenant au moins deux unités d'alimentation distinctes (26A, 26B), chaque unité d'alimentation (26A, 26B) comprenant une entrée (28A, 28B) propre à être connectée à un réseau d'alimentation électrique respectif (12A, 12B), une sortie (30A, 30B) propre à être connectée à la charge (14) et un organe (32A, 32B) d'alimentation électrique de la charge (14), caractérisé en ce le procédé comprend pour chaque unité d'alimentation les étapes suivantes :

- la mesure (100), par un capteur de mesure (34A, 34B), d'une grandeur électrique relative à un signal primaire (S2A, S2B) reçu sur l'entrée (28A, 28B),
- la régulation (108) d'une tension délivrée par l'organe d'alimentation électrique (32A, 32B) en fonction de la grandeur électrique mesurée par chaque capteur de mesure (34A, 34B).

FIG.1

FIG.2

EP 3 544 165 A1

```
┌─────────────────────────────────────────┐
│                   100                     │
└─────────────────────────────────────────┘
                     │
                     ▼
┌─────────────────────────────────────────┐
│                   102                     │
└─────────────────────────────────────────┘
                     │
                     ▼
┌─────────────────────────────────────────┐
│                   104                     │
└─────────────────────────────────────────┘
                     │
                     ▼
┌─────────────────────────────────────────┐
│                   106                     │
└─────────────────────────────────────────┘
                     │
                     ▼
┌─────────────────────────────────────────┐
│                   108                     │
└─────────────────────────────────────────┘
```

FIG.3

**EP 3 544 165 A1**

Europäisches Patentamt

European Patent Office

Office européen des brevets

# RAPPORT DE RECHERCHE EUROPEENNE

Numéro de la demande

EP 19 16 4647

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (IPC) |
| X | US 2016/079881 A1 (BARBOSA PETER [TW] ET AL) 17 mars 2016 (2016-03-17) * alinéa [0021] - alinéa [0042]; figures 1-5 * ----- | 1-10 | INV. H02M3/24 |
| X | WO 2012/007055 A1 (ERICSSON TELEFON AB L M [SE]; HOLMBERG TORBJOERN [SE] ET AL.) 19 janvier 2012 (2012-01-19) * pages 3-15; figures 1-3 * ----- | 1-10 | |
| X | US 2013/163287 A1 (PAL SUBARNA [US] ET AL) 27 juin 2013 (2013-06-27) * alinéas [0020] - [0028]; figures 1-4 * ----- | 1,10 | |
| | | | DOMAINES TECHNIQUES RECHERCHES (IPC) H02J G05F H02M |

Le présent rapport a été établi pour toutes les revendications

| Lieu de la recherche | Date d'achèvement de la recherche | Examinateur |
|---|---|---|
| Munich | 15 juillet 2019 | Grosse, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..........................................................................................
& : membre de la même famille, document correspondant

EPO FORM 1503 03.82 (P04C02)

12

**EP 3 544 165 A1**

## ANNEXE AU RAPPORT DE RECHERCHE EUROPEENNE
## RELATIF A LA DEMANDE DE BREVET EUROPEEN NO.

EP 19 16 4647

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-07-2019

| Document brevet cité au rapport de recherche | | Date de publication | Membre(s) de la famille de brevet(s) | | Date de publication |
|---|---|---|---|---|---|
| US 2016079881 | A1 | 17-03-2016 | CN | 105429483 A | 23-03-2016 |
| | | | JP | 2016063744 A | 25-04-2016 |
| | | | RU | 2015135886 A | 03-03-2017 |
| | | | US | 2016079881 A1 | 17-03-2016 |
| WO 2012007055 | A1 | 19-01-2012 | CN | 102986108 A | 20-03-2013 |
| | | | EP | 2594002 A1 | 22-05-2013 |
| | | | US | 2013119962 A1 | 16-05-2013 |
| | | | WO | 2012007055 A1 | 19-01-2012 |
| US 2013163287 | A1 | 27-06-2013 | AUCUN | | |

EPO FORM P0460

Pour tout renseignement concernant cette annexe : voir Journal Officiel de l'Office européen des brevets, No.12/82